# EUROPEAN PATENT SPECIFICATION

(11) **EP 3 418 048 B1**
(45) Date of publication and mention of the grant of the patent: **01.09.2021**
(21) Application number: 18179284.7
(22) Date of filing: 22.06.2018
(51) Int. Cl.: B32B 5/06, A41F 9/00, B32B 7/02, B32B 7/08, D03D 11/00

(54) **GARMENT HAVING ADJUSTABLE SIZE OR DIMENSION**
KLEIDUNGSSTÜCK MIT EINSTELLBARER GRÖSSE ODER DIMENSION
VÊTEMENT AYANT UNE TAILLE OU UNE DIMENSION AJUSTABLE

(30) Priority: 23.06.2017 IT 201700070641
(43) Date of publication of application: 26.12.2018
(73) Proprietor: Dainese S.p.A., 36064 Colceresa (Vicenza) (IT)
(72) Inventor: XAUSA, Simone, 36060 Molvena (Vicenza) (IT)
(74) Representative: Manfrin, Marta

(56) References cited:
- WO-A2-2011/041716
- US-A- 3 868 729
- US-A- 4 503 567
- US-A1- 2012 117 714

## Description

The present disclosure refers in general to a garment of adjustable dimension or extension, such as a piece of clothing or a portion of a piece of clothing or a wearable accessory, that means any article suitable for, or configured to, being worn. Some examples of garments are: coat, jacket, windbreaker, jacket, raincoat, down jacket, shorts, pants, skirt, shirt, t-shirt, undershirt, sweatshirt, waistcoat, cardigan, sweater, overalls, overalls, gloves or other wearable accessories. In particular, it is a garment provided with a structure whose extension, dimension or ability to cover a given surface under use conditions can be modified and increased according to the needs, so that an appreciable variation of the size of the wearable item can be obtained.

Preferably, the wearable item, according to the present disclosure, is generally suitable for being used in the clothing sector, especially for children or growing users. Eventually it may be a piece of clothing provided with coatings or protections for the human body as a garment or portion of a garment, or under-garment in order to obtain the possibility of an adaptation of the size during at least part of a user's growth.

The long-standing problem of arranging clothing with an adjustable size for children is well known. The piece of clothing may be provided with systems for adapting the size, such as to cover at least a range of few years of age. This problem is even more felt for expensive clothing.

A garment of adjustable extension, size or dimension is disclosed in US 2012/117714 A1.

A known system, especially for children's trousers, is to include an elastic band provided with eyelets in the trouser belt.

The elastic band is arranged in a channel having a through cavity. The channel extends along the belt of the trousers and is provided with two openings in correspondence of the frontal area, on both the right and left sides of the belt.

The trousers are provided with two buttons each placed near the respective opening for fixing the elastic band. In particular, by appropriately pulling the elastic band, outside both the openings, one of the eyelets of the elastic band is fixed to the respective button which is located near each opening. This adjusts the width of the trousers at the belt, possibly causing wrinkles in the trouser belt to have a smaller size.

The system described above, although advantageous from many points of view, has the drawback of requiring the presence of buttons or other systems to temporarily influence the elastic band. In particular, the buttons or similar elements are elements that determine an additional thickness, so-called thick elements. The additional thickness can create discomfort especially in tightly fitting garments or wearable items.

The buttons can also negatively influence the production costs of the piece of clothing, both in terms of additional elements present, and in terms of processing times. In fact, the belt must be provided with the buttons, the through channel, and the elastic band inserted in the through channel.

The present disclosure starts from the proposition of the technical problem of providing a garment of adjustable extension, size, or dimension, the manufacturing of which makes it possible to overcome the aforementioned drawback, that is to say it is faster to make and with minimal additional elements or structures, and/or which allows to obtain further advantages.

This is achieved by providing a garment of adjustable extension, size or dimension, a method of manufacturing, and a use according to the respective independent claims. Secondary features of the object of the present disclosure are defined in the corresponding dependent claims.

According to one aspect of the present disclosure, a garment configured to allow an adjustable extension, size or dimension includes a first layer having a first degree of elasticity or first yielding capacity, and a second layer having a second degree of elasticity or second yielding capacity. The first layer is superimposed on the second layer, and joined to the second layer in at least two fastening zones. The second degree of elasticity or second yielding capacity are less than the first degree of elasticity or first yielding capacity, respectively.

More precisely, a first point or zone of the first layer is joined to the second layer in a first fastening zone and a second point or zone of the first layer, adjacent to, but spaced apart from, the first point, is joined to the second layer in a second fastening zone. Even more particularly, the second layer is fixed to the first layer in the first fastening zone and in the second fastening zone.

The second layer can therefore prevent an extension of the first layer between the first fastening zone and the second fastening zone which goes beyond the capacity of extension, elasticity, deformation, or yielding capacity of the second layer. In other words, the second layer limits or influences or reduces an elasticity of the first layer, when the first layer is extended to the maximum extent of the second layer.

In an intermediate zone comprised between the first fastening zone and the second fastening zone, the second layer is detached from the first layer and can allow an access with a cutting tool.

When no deforming action is in place and both the first and second layers are at rest, the two layers may have the same extension. The piece of clothing can be extended in the area wherein the first layer is attached to the second layer and therefore only for that maximum extension capacity of the second layer, that is to say the layer with lower elasticity or yielding capacity. Alternatively, the second layer may have a greater extension than the first layer, and when no deforming action is in place and both the first layer and the second layer are at rest, the second layer may have a hump or bump between the first fastening zone or point and the second fastening zone or point, and therefore a greater possibility of extension.

In this way, the garment can be extended in the region in which the first layer is attached to the second layer only until the second layer with lower elasticity or yielding capacity exceeds in extension with respect to the first layer. In other words, the piece of clothing is extended within the area of the second layer, until the maximum extension of the first layer corresponds to the maximum extension of the second layer. The second layer influences or prevents a larger extension.

When an extension of the second layer is reached, the second layer can be cut between the first fastening zone or point and the second fastening zone or point. Preferably, to facilitate the cutting of the second layer between the first and the second fastening zone, the area occupied by each of said two fastening zones is smaller than the area occupied by the intermediate region, comprised between the first fastening zone and the second fastening zone. In fact, these can be fastening points, for example by sewing. In other words, the intermediate region has a greater surface extension than said first and second fastening zone.

In this way, the first layer can be extended for all its maximum extensibility and yielding capacity, without being limited by the second layer. The constraint is therefore temporary.

The first layer can be made of a material, or with a weft, which is different from the second layer, and therefore has a different extension capacity. For example, the first layer may have elastic extension capacities greater than the second layer. In other words, according to the present disclosure, the first layer and the second layer have a different yielding capacity or compliancy of the material or fabric with which they are made. The yielding capacity must be intended in the sense that, when the material and/or fabric, or in general the layer is subjected to a deformation action, such as that which occurs when the user grows and deforms the wearable item, such material and/or tissue yields more or differently, or opposes less resistance, than the material and/or fabric of the second layer yields, or opposes resistance. With different yielding capacity or compliancy, a different lack of resistance to the deformation generated when the garment is worn or the first layer and the second layer are stretched together is intended. What is relevant is the fact that a layer can stop an elasticity of the other layer.

In the context of the present disclosure, the term "fastening zone" therefore means a region where a solid union is obtained or realized between the first layer and the second layer, and which allows the second layer to limit the extension of the first layer.

In the context of the present disclosure, the term "extension" means that when the layer is spread on a flat surface, it occupies a certain area or surface. The two layers are therefore portions of material that have different capacities to assume a given surface extension, or an ability to occupy a given surface, or a different expansion capacity when subjected to deformation.

Preferably, the first layer is a layer intended to be placed or directed towards an outer area of the garment, for example it is intended to be oriented towards a visible area of the garment, opposite to the body of a user. The second layer is disposed inwardly, i.e. it is oriented towards the inside of the garment.

The first layer is part of the structure that defines the garment. In other words, the first layer defines the structure that defines at least a part of the housing that houses the human body or part of the human body, when the garment is worn. For example, the first layer is a portion of the garment, i.e. a portion of a trouser, a portion of a jacket, or a shirt. It is therefore a piece of clothing or a wearable accessory made mainly from the first layer, so from the layer with a high elasticity or yielding capacity, or reduced resistance to deformation. Such garment is mainly made of Lycra or other material. In general, the garment may be in a fabric provided with a percentage of elastomer fibers, such as elastane, such as to give elasticity to the garment. In order to have a different degree of elasticity or degree of yielding capacity between the first layer and the second layer of the garment, preferably the content of elastomer fibers in the first layer of the garment is greater than in the second layer.

It follows that a piece of clothing made of a fabric or material of particular elasticity or yielding capacity, corresponding to the elasticity or yielding capacity of the first layer, can be extended and adapted to the shape of the human body gradually or discreetly, by cutting the second layer into the intermediate zone between the first fastening zone and the second fastening zone. In fact, at a first time the first layer extends up to the maximum extension of the second layer, i.e. as long as the latter is intact, and at a second time, the first layer can be extended to the maximum of its extensibility when the second layer is cut.

It is preferable to provide a plurality of adjacent or consecutive fastening zones, such that intermediate areas between a first fastening zone and a second fastening zone follow one another separated by a single fastening zone. In other words, a plurality of successive portions of the second layer can therefore be identified in the second layer having lower elasticity. In other words, again, the second layer is a single piece and includes a plurality of successive portions defined by fastening zones which follow one another in a row.

When no deformation action is taking place and both the first layer and the second layer are at rest, and may have the same extension. So, all the portions are substantially flat. Alternatively, the second layer has a greater extension, and in the rest condition, the second layer forms contiguous fringes or bumps, one after the other separated only by the respective fastening zone or fastening point.

Preferably, according to the present disclosure, the second layer is a ribbon or strip preferably of fabric, and more preferably substantially inextensible. The tape forms a sort of bridge between the first zone or fastening point and the second zone or fastening point. The second layer can therefore be easily cut with a pair of scissors.

By the term "ribbon" or strip, it is meant, within the present disclosure, an elongated, ribbon-like element, or of a similar elongated shape in a longitudinal direction and having limited or very reduced elastic properties, which can be joined to the first layer in a first fastening zone and a second fastening zone of the patch. The second layer can also be understood as wire or a cable.

It follows that the second layer has a smaller surface extension than the surface extent of the first layer.

Compared to a longitudinal direction of the same ribbon, the first fastening zone and the second fastening zone to the patch are then arranged one after the other. In fact, the second layer is fastened in correspondence of the first zone and in correspondence of the second zone to the first layer, wherein the first zone and the second zone are subsequent in the longitudinal direction of the ribbon.

In particular, the ribbon is fastened in such a way that, when the first layer is elastically deformed, the ribbon is in a substantially flat tense condition between the first fastening zone and the second fastening zone. When the maximum extension is reached, the ribbon is cut between the first and second zone. In this way, the ribbon no longer limits the extension of the first layer.

The garment can be structured and designed in such a way as to allow a progressive adaptation, that is a progressive variation or modification, of the sizes as a growing user grows. In particular, said progressive adaptation represents an extension or enlargement of the size of the garment. The positioning and the distance between the first zone or fastening point and the second zone or fastening point of each second layer, as well as the difference in the yielding capacity between the two layers, is chosen a priori on the basis of the range of sizes to be covered.

In one embodiment, to facilitate the fastening between the first layer and the second layer, the second layer is sewn to the first layer. It follows that the first fastening zone and/or the second fastening zone represent a series of stitches or a seam extended transversely between the first layer and the second layer. The union between the first layer and the second layer can be understood as a direct union, or by interposing a further layer or several layers, for example of fabric, or other material, for example to strengthen the connection.

A method is also provided for adapting the size in a piece of clothing, preferably for developmental age. In particular, said progressive adaptation represents a variation or modification that allows an extension or enlargement of the size of the garment.

The method for modifying the size according to the present disclosure is as follows.

A garment including a first layer having a first degree of elasticity or yielding capacity is provided. The first layer can constitute the wearable item structure. That is to say, it can be a garment whose shape corresponds to the shape of the first layer.

A second layer having a second degree of elasticity or yielding capacity lower than the degree of elasticity and yielding capacity of the first layer is fixed to the first layer in at least two points or zones spaced apart one from each other.

The first layer is a layer preferably suitable for facing an outer side of the piece of clothing, and the second layer is a layer which faces an inner side, i.e. facing a user, when the piece of clothing is worn from a user. The second layer is joined to the first layer in at least two fastening zones. In other words, preferably the first layer is a layer intended to be placed towards an external area of the textile structure, i.e. it is intended to face a visible area of the textile structure. In other words, again, a first point or zone of the first layer is joined to the second layer in a first fastening zone and a second point or zone of the first layer, adjacent to the first point, is joined to the second layer in a second fastening zone.

The second layer limits an expansion of the first layer, thanks to the different yielding capacity of the two materials.

In order to allow a further expansion of the first layer, if necessary the second layer is cut or broken so as not to limit the expansion of the first layer any more. Several second layers isolated one from the other can be provided to have in a punctual way a controlled adaptation of the piece of clothing. Alternatively, a plurality of successive or consecutive fastening zones of the second layer to the first layer can be provided to allow a progressive extension or progressive increase of the size.

Further advantages, features and methods of use of the object of the present disclosure will be apparent from the following detailed description of some of its preferred embodiments, presented by way of a non-limiting example.

It is however evident that each embodiment of the object of the present disclosure may have one or more of the advantages listed above; in any case it is not however required that each embodiment simultaneously present all the advantages listed.

Reference will be made to the figures of the attached drawings, wherein:
- figure 1 shows a view of a piece of clothing according to an embodiment of the present disclosure;
- figure 2 shows a top view of the piece of clothing of figure 1;
- figures 3-6 show respectively schematic views of a principle of adaptation of sizes of a textile structure which is part of the piece of clothing of figure 1;
- figure 7 shows a view of an interior of a jacket including a textile structure according to the present disclosure;
- figure 8 shows a view of an interior of an arm of a shirt including a textile structure according to the present disclosure.

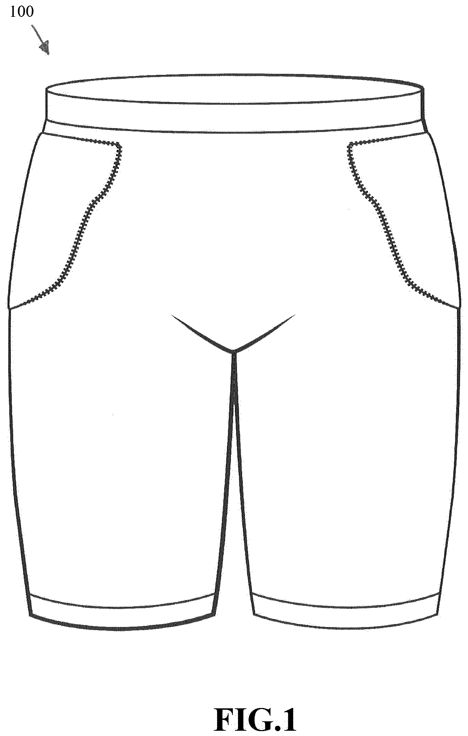

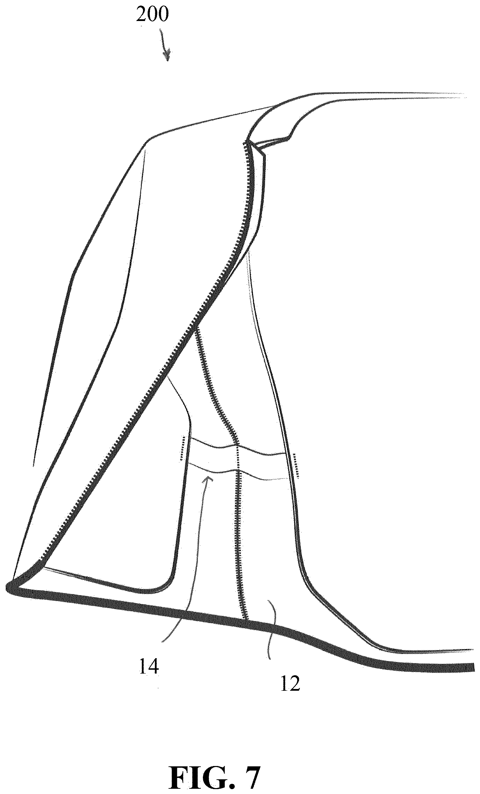

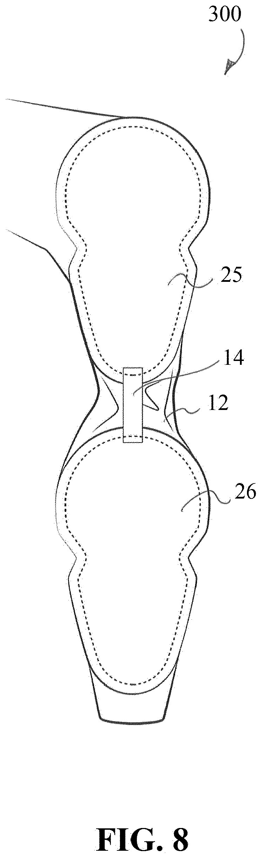

With initial reference to the attached figures, reference numbers 100, 200, 300 indicates a garment including a textile structure 10 for a size adaptation according to the present disclosure. In figure 1, the garment is an underwear shorts, or underpants. In figure 7 the garment 200 is a jacket. In Figure 8, the garment 300 is a jacket, t-shirt or gilet. Figure 8 illustrates an arm portion of the t-shirt 300.

Preferably, the textile structure 10 is particularly adapted to be used in an underwear garment, such as for example a bicycle or skis under-suit or under-garment, in particular in areas of the garment most subject to the growth of a child or childhood user. For example, with reference to figure 1, the textile structure 10 is included in correspondence of the sides of the shorts, and in the thigh end.

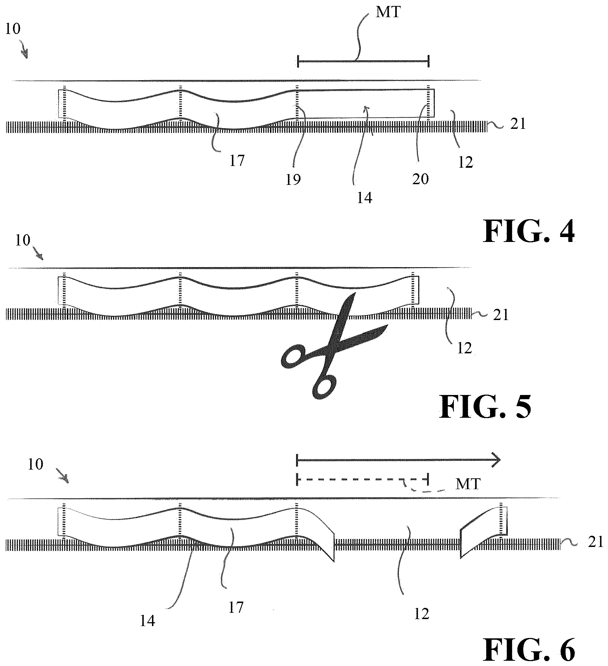

In the following, reference is made for clarity of exposition only to the textile structure of figures 1-2 at the belt, it has to be understood that the same principle can be used on the thigh bottom, or for the jacket, the vest and/or the t-shirt of figures 6-7.

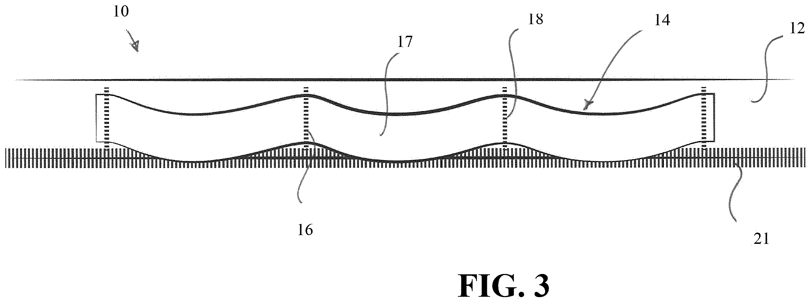

In particular, as shown in figures 1-6, the garment 100 includes a first layer 12, that in the example is preferably made of a fabric containing a high percentage of elastomer fibers, such as for example lycra, having a first elasticity or first yielding capacity. The first layer 12 preferably face an external or exposed side when in place or in use in the piece of clothing. The first layer 12 has a first face 13, or aesthetic side, facing outwardly, and a second face 15, or flesh side, or non-aesthetic side, facing the inside of the garment. The first layer 12 may also substantially coincide with the bearing or supporting structure of the wearable item, i.e. defines the shape and the mold of the garment, or, as in the embodiment of figures 1-2, is an elastic ribbon that defines the belt and an elastic ribbon that defines the thigh bottom. The elastic ribbon is joined to the remaining part of the shorts by stitching 21.

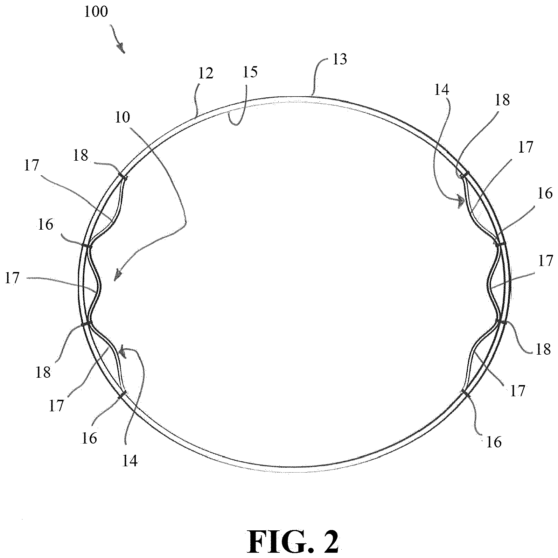

The textile structure 10 includes a second layer 14 made of a material which is less elastic and less yielding than the material of the first layer, i.e. it contains a reduced percentage of elastomer fibers. In particular, the second layer 14 may be a band associated or fixed to the second face 15 of the first layer in correspondence with at least a first fastening zone 16 and in correspondence with at least a second fastening zone 18. In practice, the second layer 14 has an intermediate region 17 comprised between the first fastening zone 16 and the second fastening zone 18. A plurality of consecutive fastening zones 16, 18 can be provided, as shown in figures 2-6.

The textile structure 10 is suitable to be tensioned or under tension when the garment 100, 200, 300, is worn or when the user grows and needs a larger size. In the tensioned condition, the first layer 12, in the intermediate region 17 confined between the first fastening zone 16 and the second fastening zone 18, is tense - in a direction substantially parallel to the face 13 or to the face 15 - up to the maximum tension MT which can take the second layer 14 (figure 4)

The second layer 14 therefore limits an extension of the first layer 12.

The second layer 14 may have a greater extension than the first layer in the intermediate zone 17. It follows that in a rest condition, the second layer may have a hump or flounce, which allows a greater extension space to the first layer 12.

In other words, because of the difference in size and elasticity or yielding, preferably due to the different content of elastomer fibers between the first layer and the second layer 14, it is possible to stretch the second layer 12 in an operative or tensioned condition, up to a maximum tension of the second layer 14. It is observable that in the intermediate region 17 the second layer is detached from the first layer to allow said extensibility.

By cutting or breaking the second layer 14 (figure 5), in one of the intermediate regions 17 comprised between the first fastening zone 16 and the second fastening zone 18, every constraint determined from the fastening of the first fastening zone and of the second fastening zone 18 is broken. The first layer 12 can exploit the greater elasticity or yielding with respect to the second layer 14 (figure 6).

In an embodiment of the present disclosure such as the one visible in the drawings, to make the second layer 14 a single ribbon fixed to the first layer in correspondence of the first fastening zone 16 and of the second fastening zone 18, or of a plurality of subsequent fastening zone 16, 18 is used. It follows that the intermediate regions 17 can be progressively cut with the growth of a user, and in any case according to the needs. Preferably, in order to facilitate the cutting of the second layer in correspondence of the intermediate region 17, the latter occupies a larger area with respect to said first and second fastening zone 16 and 18. In other words, the intermediate region 17 has a greater surface extension with respect to the first fastening zone 16 and to the second fastening zone 18.

In an embodiment of the present disclosure, as the one visible in the drawings, each of the first fastening zone 16 and the second fastening zone 18 includes a sewing line 19, 20. It is understood that the same result can be obtained also with other fastening means which allow the second layer to extend as a bridge between the subsequent fastening zones 16, 18 and allow a cut of the second layer in the intermediate region 17.

A first advantage of the textile structure 10 described above lies in that, thanks to the difference in yielding of the two materials forming the first layer 12 and the second layer 14, the yielding of the first layer 12 can be gradually controlled and/or limited by cutting the second layer 14, or a portion of the second layer 14 comprised between two subsequent fastening zones.

This technique has the advantage of requiring a few accessories and devices, and in particular only the use of a second layer 14 with respect to the first layer, and the seams of the two layers, to the advantage of a reduction of elements that can create discomfort, and also to the advantage of reduced costs and processing times.

This technique is also particularly useful in items of clothing provided with protection as partially visible in figure 8. For example, the T-shirt of figure 8 has two protections 25, 26 at the shoulder and elbow respectively. The second layer 14 is interposed between the two protections and is cut when the arm grows and the size increases, and a proper maintenance of the protections 25, 26 at the shoulder and elbow have to be ensured.

A further advantage lies in that, since it is possible to adjust the mutual distance between the fastening areas, it is possible to adjust the size adjustment accurately.

A further advantage of the textile structure 1 thus manufactured is that it is possible to exploit the elasticity inherent in the piece of clothing, especially for an under-garment, and to regulate a size adjustment only by adding a non-extendible band or other piece.

A method used to make the textile structure 10 is indicated as follows.

In describing this method, elements and parts of the textile structure 10 involved in the method and having the same function and the same structure of the elements and parts of the previously described structure embodiment retain the same reference number and are not described again in detail.

In particular, the method provides for:
- providing a first layer 12, for example a piece of an elastic or otherwise yielding material;
- providing a second layer 14;
- fastening the second layer 14 to the first layer 12, obtaining a first fastening zone 16 and a second fastening zone 18 opposed to the first fastening zone, such that the second layer 14 extends in an intermediate region 17 comprised between the first fastening zone 16 and the second fastening zone 18 and is able to limit an extension of the first layer in this intermediate zone.

If necessary, after fastening with the first layer 12, cut or break the second layer in the intermediate zone between the first fastening zone 16 and the second fastening zone 18 to allow a size adjustment.

In one embodiment of the present disclosure, the fastening of the second layer and the first layer 12 is accomplished by sewing. It follows that the second layer 14 is sewn to the first layer 12 between the first fastening zone 16 and the second fastening zone 18.

To obtain the textile structure 10, for example, the first fastening zone 16 and the second fastening zone 18 are two distinct lines of said stitching 19, 20.

The subject-matter of the present disclosure has been described hitherto with reference to preferred embodiments thereof. It is to be understood that other embodiments relating to the same inventive idea may exist, all of these falling within the scope of protection of the claims which are attached below.

## Claims

1. Garment (100, 200, 300), or piece of garment, of adjustable extension, size or dimension, including a first layer (12) defining the structure or at least a part of the structure of the garment (100, 200, 300) intended, in use, to accommodate the body of a user or a part of the body of a user wearing the garment (100, 200, 300), and a second layer (14) in the form of a ribbon or a ribbon-like element, wherein the first layer (12) has a first degree of elasticity or first yielding capacity, and the second layer (14) has a second degree of elasticity or second yielding capacity, wherein the second degree of elasticity or second yielding capacity are less than the first degree of elasticity or first yielding capacity respectively; and
wherein the first layer (12) is joined to the second layer (14) in at least a first fastening zone (16) and a second fastening zone (18), and said second layer (14) is able to limit, prevent or stop an extension, an elasticity, or yielding capacity of the first layer (12) between the first fastening zone (16) and the second fastening zone (18); and
wherein at a first time the first layer (12) extends up to the maximum extension of the second layer (14), i.e. as long as the latter is intact, and at a second time, the first layer (12) can be extended to the maximum of its extensibility when the second layer (14) is cut.

2. Garment (100, 200, 300) according to claim 1, wherein the piece of garment made of a fabric or material of particular elasticity or yielding capacity, corresponding to the elasticity or yielding capacity of the first layer (12), is extended and adapted to the shape of the human body gradually or discreetly, by cutting the second layer (14) into the intermediate zone between the first fastening zone (16) and the second fastening zone (18).

3. Garment (100, 200, 300) according to any one of the preceding claims, wherein said first and second degree of elasticity or first and second yielding capacity correspond to a different lack of resistance to deformation or to a different extension capacity between said first layer (12) and second layer (14) when they are stretched or subjected to deformation.

4. Garment (100, 200, 300) according to any one of the preceding claims, wherein the first layer (12) contains a higher number of elastomer fibers with respect to the second layer (14).

5. Garment (100, 200, 300) according to any one of the preceding claims, wherein said garment (100, 200, 300) is predominantly made from the first layer (12), or wherein the first layer (12) presents a shape coincident with a shape of the garment.

6. Garment (100, 200, 300) according to any one of the preceding claims, wherein the second layer (14) is capable of forming a bridge body between the first fastening zone (16) and the second fastening zone (18).

7. Garment (100, 200, 300) according to any one of the preceding claims, including a plurality of adjacent or consecutive fastening zones (16, 18) and the second layer (14) includes a plurality of successive sections or intermediate region (17), wherein the plurality of successive sections or intermediate regions (17) are defined or interrupted two by two one respect to the other from a single fastening zone (16, 18).

8. Garment (100, 200, 300) according to claim 7, wherein each of the fastening zones (16, 18) occupies a smaller area with respect to the intermediate region (17) between them.

9. Garment (100, 200, 300) according to any one of the preceding claims, including a seam between the first layer (12) and the second layer (14) at the first fastening zone (16) and second fastening zone (18).

10. Garment (100, 200, 300) according to any one of the preceding claims, wherein the first layer is a layer intended to be placed towards an outer region of the garment (100, 200, 300) opposite to the body of a user wearing or intended to wear the garment (100, 200, 300), and the second layer (14) is a layer intended to be placed on an inner region oriented towards the body of a user.

11. Size adaptation method for a garment (100, 200, 300), the method including:
- providing a first layer (12) of the garment (100, 200, 300), said first layer (12) defining the structure or at least a part of the structure of the garment (100, 200, 300) intended, in use, to accommodate the body of a user or a part of the body of a user wearing the garment (100, 200, 300) and having a first degree of elasticity or yielding capacity;
- providing a second layer (14) of the garment (100, 200, 300), said second layer (14) being a ribbon-like element and having a second degree of elasticity or yielding capacity less than the degree of elasticity and yielding capacity of the first layer;
- fastening the first layer (12) to the second layer (14) in at least two points or fastening zones (16, 18), wherein the first fastening zone (16) is spaced apart from the second fastening zone (18), and wherein, in an intermediate region (17) comprised between the first fastening zone (16) and the second fastening zone (18), the second layer (14) is separated from said first layer (12), and wherein the second layer (14) limits, reduces, blocks or prevents an extension capacity, a deformation, a yielding capacity, or an elasticity of the first layer (12) when the first layer (12) is extended beyond a maximum extension of the second layer (14);
- cutting or breaking the second layer so as not to limit the extension capacity, the deformation, the yielding capacity, or the elasticity of the first layer (12) and leave said first layer (12) free to extend between the first and the second fastening zone (16, 18) so as to allow a change in the size of the garment (100, 200, 300).

12. Method according to claim 11, wherein the first layer (12) is oriented towards an outer side of the garment (100, 200, 300) and the second layer is oriented towards an inner side of the garment (100, 200, 300).

13. Method according to claim 11 or 12, wherein the second layer (14) is fixed to the first layer (12) in a plurality of fastening zones (16, 18) thus defining a plurality of successive portions or a plurality of intermediate regions (17), wherein the successive portions or intermediate regions (17) are defined or spaced two by two one with respect to each other by means of a single fastening zone (16, 18).

14. Method according to claim 13, wherein the change in the size of a garment (100, 200, 300) corresponds to an extension or enlargement of the size of said garment (100, 200, 300).

15. Method according to claim 13 or 14, wherein each intermediate region (17) or each of the successive portions is cut in order to determine a progressive increase of the extensibility of the garment (100, 200, 300).

16. Use of a ribbon-like element (14) to temporarily influence, limit, prevent or block, an extension capacity, a deformation, an elasticity or a yielding capacity of a first layer (12) of a garment (100, 200, 300), said first layer (12) defining the structure or part of the structure of the garment (100, 200, 300) intended, in use, to accommodate the body of a user or part of the body of a user wearing the garment (100, 200, 300), wherein to temporarily influence, limit, prevent or stop the extension capacity, the deformation, the elasticity or the yielding capacity of the first layer, a first fastening zone (16) and a second fastening zone (18) of the ribbon-like element (14) to the first layer (12) are provided, and wherein the use of a cutting tool is provided for cutting an intermediate region (17) of said ribbon-like element (14) comprised between the first fastening zone (16) and the second fastening zone (18) when it is intended to stop influencing, limiting, preventing or blocking the extension capacity, the deformation, the elasticity or the yielding capacity of the first layer.

## Patentansprüche

1. Kleidungsstück (100, 200, 300) oder Bekleidungsteil mit einstellbarer Ausdehnung, Größe oder Abmessung, mit einer ersten Lage (12), welche die Struktur oder zumindest einen Teil der Struktur des Kleidungsstücks (100, 200, 300) definiert, das dafür gedacht ist, in Gebrauch den Körper eines Benutzers oder einen Teil des Körpers eines Benutzers aufzunehmen, der das Kleidungsstück (100, 200, 300) trägt, und einer zweiten Lage (14) in Form eines Bandes oder eines bandartigen Elements,
wobei die erste Lage (12) einen ersten Elastizitätsgrad oder ein erstes Nachgiebigkeitsvermögen und die zweite Lage (14) einen zweiten Elastizitätsgrad oder ein zweites Nachgiebigkeitsvermögen hat, wobei der zweite Elastizitätsgrad oder das zweite Nachgiebigkeitsvermögen geringer ist als der erste Elastizitätsgrad bzw. das erste Nachgiebigkeitsvermögen; und
wobei die erste Lage (12) mit der zweiten Lage (14) in zumindest einem ersten Befestigungsbereich (16) und einem zweiten Befestigungsbereich (18) verbunden ist, und die zweite Lage (14) die Ausdehnung, eine Elastizität oder das Nachgiebigkeitsvermögen der ersten Lage (12) zwischen dem ersten Befestigungsbereich (16) und zweiten Befestigungsbereich (18) begrenzen, verhindern oder stoppen kann; und
wobei zu einem ersten Zeitpunkt die erste Lage (12) sich bis zur maximalen Ausdehnung der zweiten Lage (14) erstreckt, d.h. solange letztere intakt ist, und zu einem zweiten Zeitpunkt die erste Lage (12) sich bis zum Maximum ihrer Dehnfähigkeit dehnen kann, wenn die zweite Lage (14) zerschnitten ist.

2. Kleidungsstück (100, 200, 300) nach Anspruch 1, wobei das Bekleidungsteil, das aus einem Gewebe oder Material mit bestimmter Elastizität oder bestimmtem Nachgiebigkeitsvermögen hergestellt ist, die bzw. das der Elastizität bzw. dem Nachgiebigkeitsvermögen der ersten Lage (12) entspricht, sich dehnt und sich allmählich oder stufenweise an die Form des menschlichen Körpers anpasst, indem die zweite Lage (14) in der Zwischenzone zwischen dem ersten Befestigungsbereich (16) und zweiten Befestigungsbereich (18) zerschnitten wird.

3. Kleidungsstück (100, 200, 300) nach einem der vorhergehenden Ansprüche, wobei der erste und zweite Elastizitätsgrad oder das erste und zweite Nachgiebigkeitsvermögen einem unterschiedlichen Mangel an Verformungswiderstand oder einem unterschiedlichen Ausdehnungsvermögen zwischen der ersten Lage (12) und zweiten Lage (14) entsprechen, wenn sie gestreckt oder einer Verformung unterzogen werden.

4. Kleidungsstück (100, 200, 300) nach einem der vorhergehenden Ansprüche, wobei die erste Lage (12) gegenüber der zweiten Lage (14) eine höhere Anzahl an Elastomerfasern aufweist.

5. Kleidungsstück (100, 200, 300) nach einem der vorhergehenden Ansprüche, wobei das Kleidungsstück (100, 200, 300) hauptsächlich aus der ersten Lage (12) besteht oder die erste Lage (12) eine Form hat, die mit einer Form des Kleidungsstücks übereinstimmt.

6. Kleidungsstück (100, 200, 300) nach einem der vorhergehenden Ansprüche, wobei die zweite Lage (14) dazu fähig ist, einen Brückenkörper zwischen dem ersten Befestigungsbereich (16) und zweiten Befestigungsbereich (18) zu bilden.

7. Kleidungsstück (100, 200, 300) nach einem der vorhergehenden Ansprüche, mit mehreren benachbarten oder aufeinanderfolgenden Befestigungsbereichen (16, 18), wobei die zweite Lage (14) mehrere aufeinanderfolgende Teilstücke oder Zwischenbereiche (17) umfasst, und die mehreren aufeinanderfolgenden Teilstücke oder Zwischenbereiche (17) je zwei in Bezug aufeinander von einem einzelnen Befestigungsbereich (16, 18) definiert oder unterbrochen werden.

8. Kleidungsstück (100, 200, 300) nach Anspruch 7, wobei jeder der Befestigungsbereiche (16, 18) eine kleinere Fläche in Bezug auf den Zwischenbereich (17) zwischen ihnen einnimmt.

9. Kleidungsstück (100, 200, 300) nach einem der vorhergehenden Ansprüche, mit einer Naht zwischen der ersten Lage (12) und zweiten Lage (14) am ersten Befestigungsbereich (16) und zweiten Befestigungsbereich (18).

10. Kleidungsstück (100, 200, 300) nach einem der vorhergehenden Ansprüche, wobei die erste Lage eine Lage ist, die dafür bestimmt ist, zu einem äußeren Bereich des Kleidungsstücks (100, 200, 300) hin, entgegengesetzt zum Körper eines Benutzers platziert zu werden, der das Kleidungsstück (100, 200, 300) trägt oder tragen soll, und die zweite Lage (14) eine Lage ist, die dafür bestimmt ist, an einem inneren Bereich, zum Körper eines Benutzers hin orientiert, platziert zu werden.

11. Größenanpassungsverfahren für ein Kleidungsstück (100, 200, 300), wobei das Verfahren umfasst:
- Bereitstellen einer ersten Lage (12) des Kleidungsstücks (100, 200, 300), wobei die erste Lage (12) die Struktur oder zumindest einen Teil der Struktur des Kleidungsstücks (100, 200, 300) definiert, das dafür gedacht ist, in Gebrauch den Körper eines Benutzers oder einen Teil des Körpers eines Benutzers aufzunehmen, der das Kleidungsstück (100, 200, 300) trägt, und einen ersten Elastizitätsgrad oder ein erstes Nachgiebigkeitsvermögen hat;
- Bereitstellen einer zweiten Lage (14) des Kleidungsstücks (100, 200, 300), wobei die zweite Lage (14) ein bandartiges Element ist und einen zweiten Elastizitätsgrad oder ein zweites Nachgiebigkeitsvermögen hat, der bzw. das geringer ist als der Elastizitätsgrad bzw. das Nachgiebigkeitsvermögen der ersten Lage;
- Befestigen der ersten Lage (12) an der zweiten Lage (14) an zumindest zwei Stellen oder Befestigungsbereichen (16, 18), wobei der erste Befestigungsbereich (16) vom zweiten Befestigungsbereich (18) beabstandet ist, und wobei in einem Zwischenbereich (17), der zwischen dem ersten Befestigungsbereich (16) und zweiten Befestigungsbereich (18) enthalten ist, die zweite Lage (14) von der ersten Lage (12) getrennt ist, und wobei die zweite Lage (14) eine Ausdehnungsfähigkeit, eine Verformung, ein Nachgiebigkeitsvermögen oder eine Elastizität der ersten Lage (12) begrenzt, reduziert, blockiert oder verhindert, wenn die erste Lage (12) über eine maximale Ausdehnung der zweiten Lage (14) hinaus gedehnt wird;
- Zerschneiden oder Zerreißen der zweiten Lage, um so die Ausdehnungsfähigkeit, die Verformung, das Nachgiebigkeitsvermögen oder die Elastizität der ersten Lage (12) nicht zu begrenzen, und die erste Lage (12) sich frei zwischen dem ersten und zweiten Befestigungsbereich (16, 18) ausdehnen zu lassen, um eine Änderung der Größe des Kleidungsstücks (100, 200, 300) zu ermöglichen.

12. Verfahren nach Anspruch 11, wobei die erste Lage (12) zu einer Außenseite des Kleidungsstücks (100, 200, 300) hin orientiert und die zweite Lage zu einer Innenseite des Kleidungsstücks (100, 200, 300) hin orientiert ist.

13. Verfahren nach Anspruch 11 oder 12, wobei die zweite Lage (14) an der ersten Lage (12) in mehreren Befestigungsbereichen (16, 18) fixiert ist, womit mehrere aufeinanderfolgende Abschnitte oder mehrere Zwischenbereiche (17) definiert sind, wobei die mehreren aufeinanderfolgenden Teilstücke oder Zwischenbereiche (17) je zwei in Bezug aufeinander von einem einzelnen Befestigungsbereich (16, 18) definiert oder unterbrochen werden.

14. Verfahren nach Anspruch 13, wobei die Änderung der Größe eines Kleidungsstück (100, 200, 300) einer Ausdehnung oder Vergrößerung der Größe des Kleidungsstücks (100, 200, 300) entspricht.

15. Verfahren nach Anspruch 13 oder 14, wobei jeder Zwischenbereich (17) oder jeder aufeinanderfolgenden Abschnitte zerschnitten wird, um eine zunehmende Erhöhung der Dehnfähigkeit des Kleidungsstücks (100, 200, 300) zu bestimmen.

16. Verwendung eines bandartigen Elements (14), um eine Ausdehnungsfähigkeit, eine Verformung, eine Elastizität oder ein Nachgiebigkeitsvermögen einer ersten Lage (12) eines Kleidungsstücks (100, 200, 300) zeitweise zu beeinflussen, zu begrenzen, zu verhindern oder zu blockieren, wobei die erste Lage (12), welche die Struktur oder einen Teil der Struktur des Kleidungsstücks (100, 200, 300) bildet, dafür gedacht ist, in Gebrauch den Körper eines Benutzers oder einen Teil des Körpers eines Benutzers aufzunehmen, der das Kleidungsstück (100, 200, 300) trägt, wobei, um die Ausdehnungsfähigkeit, die Verformung, die Elastizität oder das Nachgiebigkeitsvermögen der ersten Lage zeitweise zu beeinflussen, zu begrenzen, zu verhindern oder zu unterbinden, ein erster Befestigungsbereich (16) und ein zweiter Befestigungsbereich (18) des bandartigen Elements (14) an der ersten Lage (12) vorgesehen sind, und wobei die Verwendung eines Schneidwerkzeugs vorgesehen ist, um einen Zwischenbereich (17) des bandartigen Elements (14) zu zerschneiden, der zwischen dem ersten Befestigungsbereich (16) und zweiten Befestigungsbereich (18) enthalten ist, wenn beabsichtigt ist, die Ausdehnungsfähigkeit, die Verformung, die Elastizität oder das Nachgiebigkeitsvermögen der ersten Lage zu beeinflussen, zu begrenzen, zu verhindern oder zu blockieren.

## Revendications

1. Vêtement (100, 200, 300) ou partie de vêtement, d'extension, taille ou dimension ajustable, comprenant une première couche (12) définissant la structure ou au moins une partie de la structure du vêtement (100, 200, 300) prévue, à l'usage, pour recevoir le corps d'un utilisateur ou une partie du corps d'un utilisateur portant le vêtement (100, 200, 300), et une seconde couche (14) se présentant sous la forme d'un ruban ou d'un élément en forme de ruban, dans lequel la première couche (12) a un premier degré d'élasticité ou première capacité de flexibilité, et la seconde couche (14) a un second degré d'élasticité ou seconde capacité de flexibilité, dans lequel le second degré d'élasticité ou seconde capacité de flexibilité sont inférieurs au premier degré d'élasticité ou à la première capacité de flexibilité respectivement ; et
dans lequel la première couche (12) est assemblée à la seconde couche (14) dans au moins une première zone de fixation (16) et une seconde zone de fixation (18), et ladite seconde couche (14) peut limiter, empêcher ou arrêter une extension, une élasticité ou une capacité de flexibilité de la première couche (12) entre la première zone de fixation (16) et la seconde zone de fixation (18) ; et
dans lequel dans un premier temps, la première couche (12) s'étend jusqu'à l'extension maximum de la seconde couche (14), c'est-à-dire tant que cette dernière est intacte, et dans un second temps, la première couche (12) peut être étendue jusqu'au maximum de son extensibilité lorsque la seconde couche (14) est coupée.

2. Vêtement (100, 200, 300) selon la revendication 1, dans lequel la partie de vêtement réalisée avec un tissu ou un matériau d'élasticité ou de capacité de flexibilité particulière, correspondant à l'élasticité ou à la capacité de flexibilité de la première couche (12), est étendue et adaptée à la forme du corps humain progressivement ou discrètement, en coupant la seconde couche (14) dans la zone intermédiaire entre la première zone de fixation (16) et la seconde zone de fixation (18).

3. Vêtement (100, 200, 300) selon l'une quelconque des revendications précédentes, dans lequel lesdits premier et second degrés d'élasticité ou première et seconde capacités de flexibilité correspondent à un manque différent de résistance à la déformation ou à une capacité d'extension différente entre ladite première couche (12) et la seconde couche (14) lorsqu'elles sont étirées ou soumises à la déformation.

4. Vêtement (100, 200, 300) selon l'une quelconque des revendications précédentes, dans lequel la première couche (12) contient un plus grand nombre de fibres élastomères par rapport à la seconde couche (14).

5. Vêtement (100, 200, 300) selon l'une quelconque des revendications précédentes, dans lequel ledit vêtement (100, 200, 300) est principalement réalisé à partir de la première couche (12) ou dans lequel la première couche (12) présente une forme coïncidant avec une forme du vêtement.

6. Vêtement (100, 200, 300) selon l'une quelconque des revendications précédentes, dans lequel la seconde couche (14) peut former un corps de pont entre la première zone de fixation (16) et la seconde zone de fixation (18).

7. Vêtement (100, 200, 300) selon l'une quelconque des revendications précédentes, comprenant une pluralité de zones de fixation adjacentes ou consécutives (16, 18) et la seconde couche (14) comprend une pluralité de sections successives ou régions intermédiaires (17), dans lequel la pluralité de sections successives ou de régions intermédiaires (17) sont définies ou interrompues deux par deux l'une par rapport à l'autre d'une zone de fixation unique (16, 18).

8. Vêtement (100, 200, 300) selon la revendication 7, dans lequel chacune des zones de fixation (16, 18) occupe une plus petite zone par rapport à la région intermédiaire (17) entre elles.

9. Vêtement (100, 200, 300) selon l'une quelconque des revendications précédentes, comprenant une couture entre la première couche (12) et la seconde couche (14) au niveau de la première zone de fixation (16) et de la seconde zone de fixation (18).

10. Vêtement (100, 200, 300) selon l'une quelconque des revendications précédentes, dans lequel la première couche est une couche prévue pour être placée vers une région externe du vêtement (100, 200, 300) opposée au corps d'un utilisateur portant ou ayant prévu de porter le vêtement (100, 200, 300) et la seconde couche (14) est une couche prévue pour être placée sur une région interne orientée vers le corps d'un utilisateur.

11. Procédé d'adaptation de taille pour un vêtement (100, 200, 300), le procédé comprenant les étapes suivantes :
prévoir une première couche (12) du vêtement (100, 200, 300), ladite première couche (12) définissant la structure ou au moins une partie de la structure du vêtement (100, 200, 300) prévue, à l'usage, pour loger le corps d'un utilisateur ou une partie du corps d'un utilisateur portant le vêtement (100, 200, 300) et ayant un premier degré d'élasticité ou de capacité de flexibilité ;
prévoir une seconde couche (14) du vêtement (100, 200, 300), ladite seconde couche (14) étant un élément en forme de ruban et ayant un second degré d'élasticité ou capacité de flexibilité inférieur au degré d'élasticité et de capacité de flexibilité de la première couche ;
fixer la première couche (12) à la seconde couche (14) dans au moins deux points ou zones de fixation (16, 18), dans lequel la première zone de fixation (16) est espacée de la seconde zone de fixation (18), et dans lequel, dans une région intermédiaire (17) comprise entre la première zone de fixation (16) et la seconde zone de fixation (18), la seconde couche (14) est séparée de ladite première couche (12), et dans lequel la seconde couche (14) limite, réduit, bloque ou empêche une capacité d'extension, une déformation, une capacité de flexibilité ou une élasticité de la première couche (12) lorsque la première couche (12) est étendue au-delà d'une extension maximum de la seconde couche (14) ;
couper ou rompre la seconde couche afin de ne pas limiter la capacité d'extension, la déformation, la capacité de flexibilité ou l'élasticité de la première couche (12) et laisser ladite première couche (12) libre de s'étendre entre la première et la seconde zone de fixation (16, 18) afin de permettre un changement de taille du vêtement (100, 200, 300).

12. Procédé selon la revendication 11, dans lequel la première couche (12) est orientée vers un côté externe du vêtement (100, 200, 300) et la seconde couche est orientée vers un côté interne du vêtement (100, 200, 300).

13. Procédé selon la revendication 11 ou 12, dans lequel la seconde couche (14) est fixée à la première couche (12) dans une pluralité de zones de fixation (16, 18) définissant ainsi une pluralité de parties successives ou une pluralité de régions intermédiaires (17), dans lequel les parties successives ou les régions intermédiaires (17) sont définies ou espacées deux par deux par rapport aux autres au moyen d'une seule zone de fixation (16, 18).

14. Procédé selon la revendication 13, dans lequel le changement de taille d'un vêtement (100, 200, 300) correspond à une extension ou agrandissement de la taille dudit vêtement (100, 200, 300).

15. Procédé selon la revendication 13 ou 14, dans lequel chaque région intermédiaire (17) ou chacune des parties successives est coupée afin de déterminer une augmentation progressive de l'extensibilité du vêtement (100, 200, 300).

16. Utilisation d'un élément en forme de ruban (14) pour influencer, limiter, empêcher ou bloquer temporairement une capacité d'extension, une déformation, une élasticité ou une capacité de flexibilité d'une première couche (12) d'un vêtement (100, 200, 300), ladite première couche (12) définissant la structure ou une partie de la structure du vêtement (100, 200, 300) prévue, à l'usage, pour recevoir le corps d'un utilisateur ou une partie du corps d'un utilisateur portant le vêtement (100, 200, 300), dans laquelle pour influencer, limiter, empêcher ou arrêter temporairement la capacité d'extension, la déformation, l'élasticité ou la capacité de flexibilité de la première couche, une première zone de fixation (16) et une seconde zone de fixation (18) de l'élément en forme de ruban (14) par rapport à la première couche (12) sont prévues, et dans lequel l'utilisation d'un outil de coupe est prévue pour couper une région intermédiaire (17) dudit élément en forme de ruban (14) compris entre la première zone de fixation (16) et la seconde zone de fixation (18) lorsqu'il est prévu d'arrêter d'influencer, de limiter, d'empêcher ou de bloquer la capacité d'extension, la déformation, l'élasticité ou la capacité de flexibilité de la première couche.
